# EUROPEAN PATENT APPLICATION

(11) **EP 0 985 938 A1**
(43) Date of publication of application: **15.03.2000**
(21) Application number: 99202770.6
(22) Date of filing: 27.08.1999
(51) Int. Cl.: G01S 13/48, H01Q 25/00

(54) **Radar apparatus**

(30) Priority: 10.09.1998 NL 1010062
(71) Applicant: HOLLANDSE SIGNAALAPPARATEN B.V., 7554 RR Hengelo (NL)
(72) Inventor: Reits, Bernard Jozef, 7555 GW Hengelo (NL)

(57) **Abstract**

Radar system operating in accordance with the V-beam principle, enabling the instantaneous determination of the elevation of a target by comparing the azimuth values obtained with the first antenna beam with the azimuth values obtained with a second beam. According to the invention, the two beams are generated alternately, using one single antenna.

## Description

The invention relates to a radar system for generating position indications of targets present in the radar system search volume, comprising an antenna for generating a first fan beam, which first fan beam defines a first antenna beam plane, and rotation means for rotating said antenna in azimuth for periodically scanning the search volume; and radar means acting in concert with the antenna, for generating target-related azimuth and range data.

Radar apparatus of this type are widely used. The drawback of these known radar apparatus is their failure to produce elevation data. The present invention obviates this drawback and is characterized in that the antenna is designed to optionally generate a first or a second fan beam, the latter beam defining a second antenna beam plane which makes an angle with the first antenna beam plane and that the radar means are designed to generate target-related azimuth data, range data and elevation data within one scan, using the first fan beam and the second fan beam.

In case of an alternate use of the first fan beam and the second fan beam, echoes related to one target are acquired with corresponding range data and different azimuth data. On the basis of this data and the relative position of the two antenna beam planes, the target elevation can be easily ascertained.

Radar systems that in a similar manner generate target elevation data by means of two juxtaposed antennas are well-known, but seldom used, because of the prohibitive price and considerable wind sensitivity of a duplicate antenna, the latter factor necessitating more powerful drive means which would add to the overall weight and volume.

A radar system which enables the elevation of a target to be determined with one antenna is set forth in EP-B-0.490.423. However, in using this known radar apparatus several scans are needed to determine target elevation, which is unacceptable when for instance pop-up targets, exposed to view for just a few seconds, are to be engaged.

A favourable embodiment according to an aspect of the invention is characterized in that an intersecting line of the first antenna beam plane and the second antenna beam plane runs at least substantially parallel to the earth's surface. Particularly in case of an intersecting line tangent to the earth's surface, this will cause surface targets measured via both fan beams to coincide, a phenomenon that may serve to support the usual MTI or MTD during clutter suppression.

A further favourable embodiment according to an aspect of the invention is characterized in that the first antenna beam plane makes a right angle with the earth's surface. In this embodiment, the first fan beam yields a conventional radar "picture" which represents targets with the correct azimuth data, whereas the data obtained in the second fan beam serve as a basis for determining the elevation of targets.

A further favourable embodiment according to an aspect of the invention is characterized in that an angle defined by the first antenna beam plane and the earth's surface and an angle defined by the second antenna beam plane and the earth's surface are opposed. Consequently, both antenna beam planes make an angle with the earth's surface. The advantage in this situation is that the mirror effect, caused by the earth's surface, will for both beams be reduced to an equivalent extent, because a direct echo signal lies within the fan beam, whereas an indirect echo signal is partially outside this beam. A concomitant advantage is that a target's true azimuth can be simply ascertained during the processing by averaging the azimuth values measured with the two antenna beams.

A further favourable embodiment of the radar system according to the invention is characterized in that the antenna comprises a first subarray of radiators for realizing the first fan beam and a second subarray of radiators for realizing the second fan beam and that each individual subarray is provided with a supply system, with the subarrays preferably mounted on a joint antenna face. In a very favourable realization, the radiators of the first subarray are disposed between radiators of the second subarray. This entails the advantage that the two subarrays combined do not outmeasure a single antenna generating a comparable fan beam.

A further favourable embodiment of the radar system according to the invention, where the two subarrays can relatively simply be combined is characterized in that the first subarray and the second subarray are implemented as a stripline antenna-array or as a microstrip antenna-array, provided with dipole or patch antennas.

The invention will now be explained in further detail with reference to the following figures, of which:
- Fig. 1: schematically represents a radar system according to the invention;
- Fig. 2: is a schematic representation of a feasible embodiment of an antenna in top view;
- Fig. 3: is a schematic representation of a feasible embodiment of an antenna in front view.

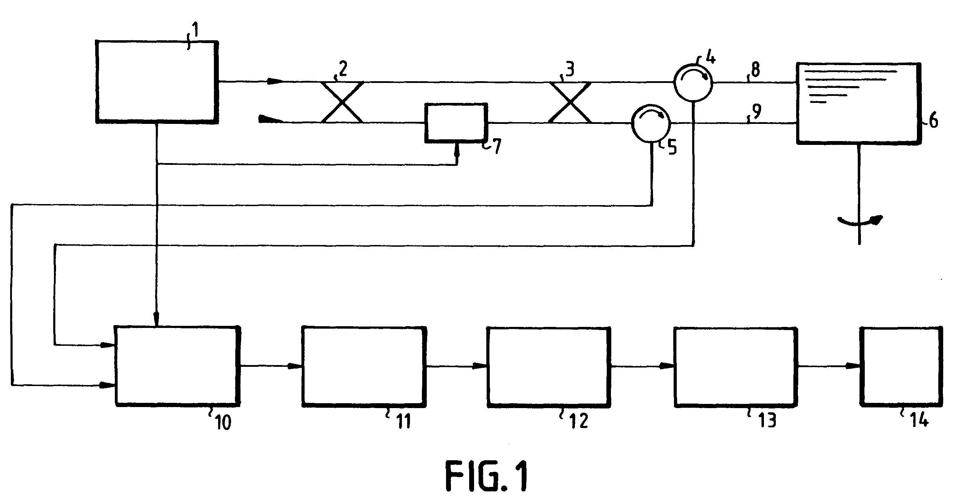

Fig. 1 is a schematic representation of a radar system according to the invention, with a transmitter 1 generating transmitter pulses that are applied to a rotating antenna 6 via a first hybrid 2, a second hybrid 3, a first circulator 4 and a second circulator 5. A phase shifter 7, positioned between first hybrid 2 and second hybrid 3, is in a manner known in the art controlled by transmitter 1 in such a way that radar transmissions provided by transmitter 1 are guided to alternately an even input 8 or an odd input 9 of antenna 6. Antenna 6 is composed of a stack of stripline antennas, the even-numbered striplines realizing a first fan beam and the odd-numbered striplines realizing a second fan beam. A special feature is that the two fan beams do not lie in one plane, but show a certain relative canting angle and that both fan beams moreover exactly intersect at the earth's surface. Phase shifter 7 consequently ensures that the radar transmissions realize an alternate first and a second beam. A target illuminated by the first fan beam will produce an echo signal which is fed to a receiver 11 via antenna 6, circulator 4 and PIN diode switch 10 and which in a manner known in the art will generate a hit in video processor 12. Based on hits thus obtained during each revolution of antenna 6, track processor 13 builds up a track. The hits and the tracks are presented to an operator on display 14. Likewise, a target illuminated by the second fan beam will produce an echo signal which is applied to receiver 11 via antenna 6, circulator 5 and PIN diode switch 10 and which generates a hit in video processor 12. Based on the hits thus obtained during each revolution of antenna 6, track processor 12 also builds up a track. PIN diode switch 10 is controlled simultaneously with phase shifter 7 in such a way that one of the inputs 8, 9 is always connected to both transmitter 1 and receiver 11.

When comparing the hits that in the course of one scan have been obtained for a target by means of two separate fan beams, but otherwise identical radar transmissions, the measured ranges, velocities and target strengths correspond quite closely. This is not necessarily the case where the azimuth values are concerned. If a target is in close proximity to the earth's surface, i.e. close to the point of intersection of the first and the second fan beam, the azimuth values are identical. If the target has attained a certain elevation, it is possible to determine the elevation in an obvious manner on the basis of the range and the differences in azimuth values. For two fan beams, each with a canting angle θ, the elevation h can for instance be determined with the formula: h = R Δϕ/2 tg(θ), where R represents the measured range and Δϕ the measured difference in azimuth values. For a fan beam with a 1° beam width and a 30° canting angle for both antennas, this formula enables the elevation of a target to be determined with an accuracy of 1°, which is sufficient to control a fire control radar such that an acquisition scan in elevation is no longer required.

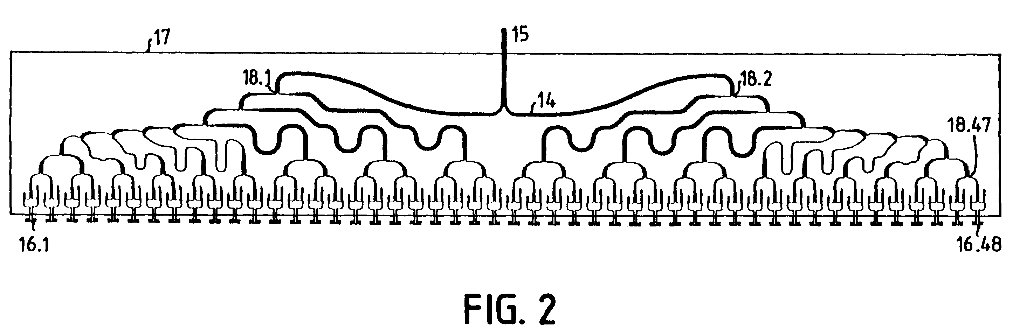

Fig. 2 schematically represents a feasible embodiment of an antenna 16 in top view. In this embodiment, the antenna comprises a stack of microwave-distribution networks. In Fig. 2, only the topmost network 14 is exposed to view. Per network, microwave energy is supplied to an input 15, which energy is distributed by network 14 over a number of radiators 16.1,.., 16.48, in this embodiment realized as dipole antennas which are powered via balun devices. Network 14 is realized in stripline, etched on a kapton foil which is inserted between two layers of synthetic foam between two ground planes 17, a technology known from for instance EP-A- 0.700.115, which document is incorporated by reference. The actual distribution of energy is realized in splitters 18.1,..,18.47, known in the art. The distribution for the various distribution networks contained in the antenna has been chosen such that, on the antenna face, an illumination is realized which yields a beam with predefined parameters. Well-known beam shapes for instance include a pencil beam, a fan beam of a cosec² beam. If it desirable to realize a known, albeit slightly canted beam, this is, according to the invention, not effected by canting the antenna as such, but by canting the illumination on the antenna face or worded differently, by choosing the distribution of the energy in the splitters 18.1,..,18,47 such that the required illumination is obtained.

For an antenna that enables the realization of two beams with different canting angles, it is now sufficient to arrange microwave-distribution networks in a stack, with the even-numbered networks realizing the first beam and the odd-numbered networks realizing the second beam. In this process, the inputs 15 of the even-numbered networks are in a manner known in the art combined to form the even input 8 of antenna 6 and the inputs 15 of the odd-numbered networks are combined to form the odd input 9 of antenna 6.

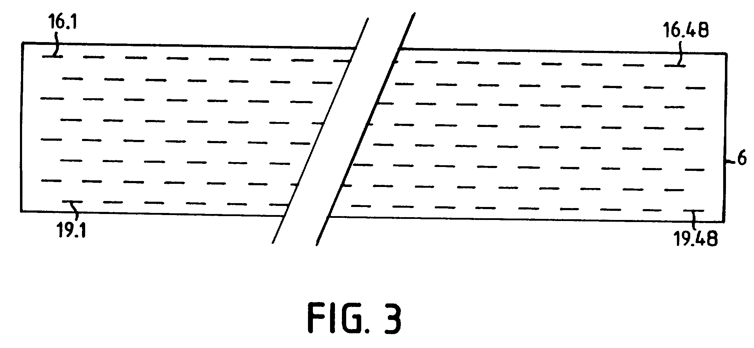

Fig. 3 is a schematic representation of a feasible embodiment of an antenna 6 in front view. Of the even-numbered distribution networks, only the dipoles 16.1,..16.48 are exposed to view; of the odd-numbered distribution networks, the figure only shows the dipoles 19.1,..,19.48. The distance between two even-numbered distribution networks is approximately λ/2 for the radar transmit frequency used; the distance between two odd-numbered distribution networks is approximately the same. The thickness of a foam-stripline package consisting of a ground plane, a layer of synthetic foam, a kapton foil on which the distribution network has been etched, another layer of foam and, finally, another ground plane is then approximately λ/4. The dipoles of the even-numbered and odd-numbered networks are staggered, which reduces the mutual coupling between the networks.

Although the invention has been described with reference to an embodiment realized in foam-stripline, it will be obvious for those skilled in the art that other distribution networks, e.g. realized in microstrip, are also suitable. Likewise, patch antennas may be used instead of dipole antennas. An additional possibility is to completely realize the antenna in waveguide with the even-numbered waveguides constituting the first subarray and the odd-numbered waveguides constituting the second subarray; with coupling slots chosen to determine the weighting factors in a manner known in the art.

## Claims

1. Radar system for generating position indications of targets present in the radar system search volume, comprising an antenna for generating a first fan beam, which first fan beam defines a first antenna beam plane, and rotation means for rotating said antenna in azimuth direction for periodically scanning the search volume; and radar means acting in concert with the antenna, for generating target-related azimuth and range data,
characterized in that the antenna is designed to optionally generate a first fan beam or a second fan beam, the latter beam defining a second antenna beam plane which makes an angle with the first antenna beam plane, and that the radar means are designed to generate target-related azimuth data, range data and elevation data within one scan, using the first fan beam and the second fan beam.

2. Radar system as claimed in claim 1, characterized in that an intersecting line of the first antenna beam plane and the second antenna beam plane runs at least substantially parallel to the earth's surface.

3. Radar system as claimed in claim 2, characterized in that the first antenna beam plane makes a right angle with the earth's surface.

4. Radar system as claimed in claim 2, characterized in that an angle defined by the first antenna beam plane and the earth's surface and an angle defined by the second antenna beam plane and the earth's surface are opposed.

5. Radar system as claimed in any of the claims 3 or 4, characterized in that the antenna comprises a first subarray of radiators for realizing the first fan beam and a second subarray or radiators for the realization of the second fan beam and that each individual subarray is provided with a supply system.

6. Radar system as claimed in claim 5, characterized in that the subarrays are mounted on a joint antenna face.

7. Radar system as claimed in claim 6, characterized in that the radiators of the first subarray are disposed between radiators of the second subarray.

8. Radar system as claimed in claim 7, characterized in that the first subarray and the second subarray are implemented as a stripline antenna-array or as a microstrip antenna-array, provided with dipole or patch antennas.

9. Radar system as claimed in claim 7, characterized in that the first and the second subarray are realized on the basis of foam-stripline technology and that the antenna array is composed of a package of alternately a foam-stripline pertaining to the first subarray and a foam-stripline pertaining to the second subarray.

10. Antenna, suitable for incorporation in a radar system as claimed in any of the claims 1 through 9.
